(19) Europäisches Patentamt
European Patent Office
Office européen des brevets

(11) **EP 3 490 125 A1**

(12) **EUROPEAN PATENT APPLICATION**

(43) Date of publication:
**29.05.2019 Bulletin 2019/22**

(51) Int Cl.:
*H02K 35/00* ^(2006.01)   *F03G 7/08* ^(2006.01)

(21) Application number: **17203016.5**

(22) Date of filing: **22.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Technologies Oy 02610 Espoo (FI)**

(72) Inventor: **ODONOGHUE, Declan Dublin (IE)**

(74) Representative: **Nokia EPO representatives Nokia Technologies Oy Karaportti 3 02610 Espoo (FI)**

(54) **VIBRATION ENERGY HARVESTER**

(57)    An apparatus is described comprising a first mass element, a second mass element located within a first mass element such that the second mass element is free to move within the first mass element (wherein the first mass element has a mass larger than the second mass element), and a first shaft connected to the second mass element outside the first mass element. The second mass element extends out of the first mass element to connect with the first shaft. Either the first mass element includes permanent magnets and the second mass element includes coils or the second mass element includes permanent magnets and first mass element includes coils, such that a current is induced in the coils when the second mass element moves relative to the first mass element.

Fig. 3

EP 3 490 125 A1

## Description

## Field

The present specification relates to vibration energy harvesters.

## Background

Energy harvesting is the conversion of ambient energy to useful electrical energy. Such ambient energy may, for example, be in the form of light, heat or vibrations among others. Ambient vibrational energy is pervasive, with sources including machinery, transportation systems, buildings and bridges, and human motion. The power generated from such vibrational energy can be used for the autonomous operation of low-power electronics, such as wireless sensors. Such sensors currently typically rely on battery power, which limits their wide-scale deployment, as the finite lifetime and environmental impact of batteries affects their applicability. Energy harvesters are a potential enabling technology for distributed networks of these wireless sensors (sometimes referred to as wireless sensor networks (WSNs)), as energy harvesters may be able to supplement or replace batteries for the autonomous operation of the sensors.

Devices that convert vibrational energy into electrical energy are referred to herein as vibration energy harvesters (VEHs). These VEHs are typically spring-mass systems located inside a housing, with external vibration resulting in relative motion between the mass and the housing. This relative motion allows energy to be extracted in a variety of ways, such as using inductive, piezoelectric and electrostatic methods.

Known vibration energy harvesters are typically resonant systems, meaning that when the excitation frequency corresponds to the natural frequency of the spring-mass system, a large response is achieved and energy can be extracted from the system. However, the bandwidth of such a system is narrow, which dramatically decreases the effectiveness of such a device in environments where the vibration spectra are temporally varying. Consequently, a device with improved efficiency which can operate over a wider range of frequencies is desired.

## Summary

In a first aspect, this specification describes an apparatus comprising: a first mass element; a second mass element located within a first mass element such that the second mass element is free to move within the first mass element, wherein the first mass element has a mass larger than the second mass element; and a first shaft connected to the second mass element outside the first mass element, wherein the second mass element extends out of the first mass element to connect with the first shaft, wherein: either the first mass element includes permanent magnets and the second mass element includes coils or the second mass element includes permanent magnets and first mass element includes coils, such that a current is induced in the coils when the second mass element moves relative to the first mass element. The first and second mass elements may interact to generate velocity amplification through momentum transfer. The apparatus may be a vibration energy harvester.

In the first aspect, a second shaft may be connected to the second mass element outside the first mass element, wherein one of the first and second shafts is located above the first mass element and the other of the first and second shafts is located below the first mass element.

The first mass element may be connected to a top of the apparatus via a first spring and/or to a base of the apparatus via a second spring. The first spring may be a planar spring. Alternatively, or in addition, the second spring may be planar spring.

The first aspect may further comprise one or more springs to mediate impacts between the first and second mass elements at upper and lower displacement limits of the second mass element.

In the first aspect, the permanent magnet may comprise neodymium iron boron permanent magnets.

In the first aspect, the coils may comprise a coil holder with copper coil wound around said coil holder.

In the first aspect, the first shaft may be shaped to restrict the rotation of the second mass element relative to the first mass element.

In a second aspect, this specification describes a method comprising: transferring momentum from a first mass element to a second mass element located within the first mass element, the first mass element having a mass larger than the second mass element, wherein the second mass element is connected to a first shaft outside the first mass element and the second mass element extends out of the first mass to connect with the first shaft, wherein either the first mass element includes permanent magnets and the second mass element includes coils or the second mass element includes permanent magnets and first mass element includes coils; and inducing a current in the coils when the second mass element moves relative to the first mass element.

In the second aspect, momentum may be transferred by interaction including substantially elastic collisions. Alternatively, or in addition, momentum may be transferred through collisions that do not include physical contact between the first and second mass elements.

In a third aspect, this specification describes an apparatus configured to perform any method as described with reference to the second aspect.

In a fourth aspect, this specification describes computer-readable instructions which, when executed by computing apparatus, cause the computing apparatus to perform any method as described with reference to the second aspect.

In a fifth aspect, this specification describes an apparatus comprising: at least one processor; and at least one memory including computer program code which, when executed by the at least one processor, causes the apparatus to: transfer momentum from a first mass element to a second mass element located within the first mass element, the first mass element having a mass larger than the second mass element, wherein the second mass element is connected to a first shaft outside the first mass element and the second mass element extends out of the first mass to connect with the first shaft, wherein either the first mass element includes permanent magnets and the second mass element includes coils or the second mass element includes permanent magnets and first mass element includes coils; and induce a current in the coils when the second mass element moves relative to the first mass element.

In a sixth aspect, this specification describes an apparatus comprising: means for transferring momentum from a first mass element to a second mass element located within the first mass element, the first mass element having a mass larger than the second mass element, wherein the second mass element is connected to a first shaft outside the first mass element and the second mass element extends out of the first mass to connect with the first shaft, wherein either the first mass element includes permanent magnets and the second mass element includes coils or the second mass element includes permanent magnets and first mass element includes coils; and means for inducing a current in the coils when the second mass element moves relative to the first mass element.

In an seventh aspect, this specification describes a system comprising an apparatus as described with reference to the first, third, fifth or sixth aspect or a method as described with reference to the second aspect, the system further comprising means for converting the current induced in the coils into a DC supply.

In an eighth aspect, this specification describes a sensor comprising a power supply incorporating an apparatus as described with reference to the first, third, fifth or sixth aspect or a system as described with reference to the seventh aspect.

**Brief description of the drawings**

Example embodiments will now be described, by way of non-limiting examples, with reference to the following schematic drawings, in which:

Figure 1 is a block diagram of a system in accordance with an example embodiment;
Figure 2 is a highly schematic cross-sectional view of a device in accordance with an example embodiment;
Figure 3 is a cross-section of a device in accordance with an example embodiment;
Figure 4 is a plan view of a spring that may be used in the device of Figure 3;
Figure 5 shows an example shaft arrangement that may be used in the device of Figure 3;
Figure 6 shows an alternative example shaft arrangement that may be used in the device of Figure 3;
Figure 7 is a circuit schematic in accordance with an example embodiment;
Figure 8 is a flow chart showing an algorithm in accordance with an example embodiment; and
Figure 9 is a highly schematic cross-sectional view of a part of a device in accordance with an example embodiment.

**Detailed description**

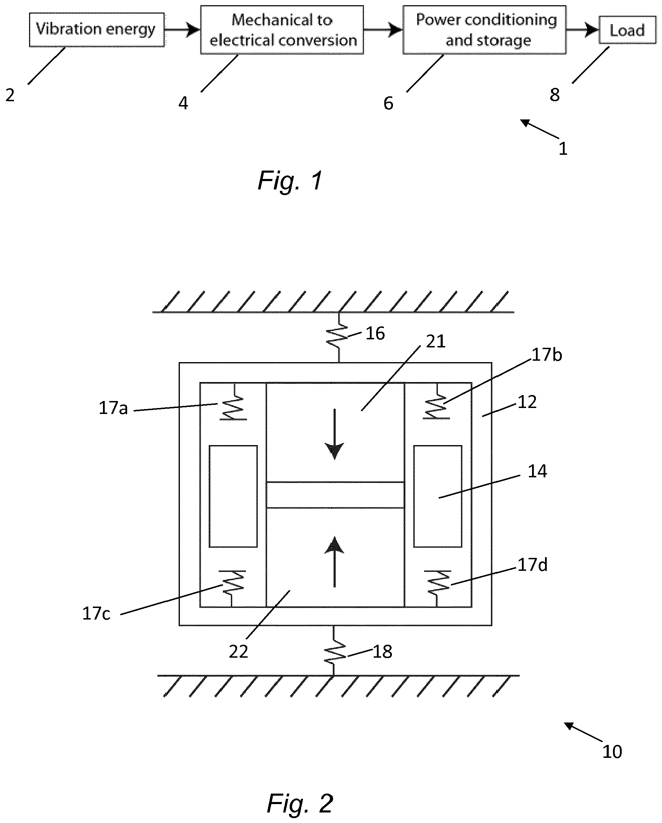

Figure 1 is a block diagram of a system, indicated generally by the reference numeral 1, in accordance with an example embodiment. The system 1 comprises a source of vibration energy 2, a mechanical to electrical conversion module 4 for converting the vibration energy into electrical energy, a power conditioning module 6 for converting the electrical output of the module 4 into a suitable form and a load 8 that consumes the generated and conditioned electrical energy. The load 8 may be a sensor, as described above, but many alternative uses of the electrical energy (including battery storage) are possible.

Figure 2 is a highly schematic cross-sectional view of a device, indicated generally by the reference numeral 10, in accordance with an example embodiment. The device 10 may be used as the mechanical to electrical conversion module 4 of the system 1.

The device 10 comprises a first mass element 12 and a second mass element 14. The second mass element 14 is mounted within the first mass element, such that the second mass element is free to move within the second mass element (a so-called 'embedded mass design'). Moreover, the second mass element is smaller than the first mass element, in order to generate velocity amplification (as discussed further below). A first spring 16 is provided to couple the first mass element 12 to a first surface of the device housing and a second spring 18 is provided to couple the first mass element 12 to a second surface of the device housing. Springs 17a to 17d are also used to mediate the impacts between the first and second mass elements 12 and 14 at the upper displacement limit and lower displacement limit of the second mass element. The springs 17a to 17d may be attached to either the first mass element or second mass element, but not both. The first and second masses are free to vibrate in response to a vibration stimulus.

In one embodiment, the first mass element 12 includes one or more permanent magnets (the permanent magnets 21 and 22 labelled in Figure 2) and the second mass element 14 includes coils. Thus, in response to a vibration stimulus, the second mass element moves relative to the first mass element such that a current is induced in the coils. This current can be detected by extracting signals from the second mass element 14, which are connected to the power conditioning and storage circuitry 6. Thus, for example, electrical leads may extend from the coils of the second mass element 14 to the power conditioning circuitry 6 of the system 1.

Since the device 10 has two mass elements, each constrained to linear movement (one-dimensional motion in a straight line), the device 10 may be referred to as a two-degrees of freedom (2-DOF) vibration energy harvester (VEH).

In a 2-DoF VEH, such as the device 10, velocity amplification may be realised through substantially elastic collisions between the mass elements, where one mass element has a larger mass than the other. If the larger mass element (such the first mass element 12) impacts the smaller mass element (such as the second mass element 14), the velocity of the smaller mass element increases relative to the larger mass element, according to the principles of conservation of momentum. The larger the mass ratio (m1/m2), the greater the velocity gain on impact. In an electromagnetic energy harvester, the power generated is proportional to the relative velocity between the coil and magnetic field squared ($P \propto (dz/dt)^2$). Hence, velocity amplification may be used to increase this relative velocity between the coil and magnetic field, and, consequently, achieve a large increase in power output.

Thus, the system 10 provides a vibration energy harvester using the transfer of kinetic energy through sequential collisions in a series of free-moving mass elements (such as the mass elements 12 and 14).

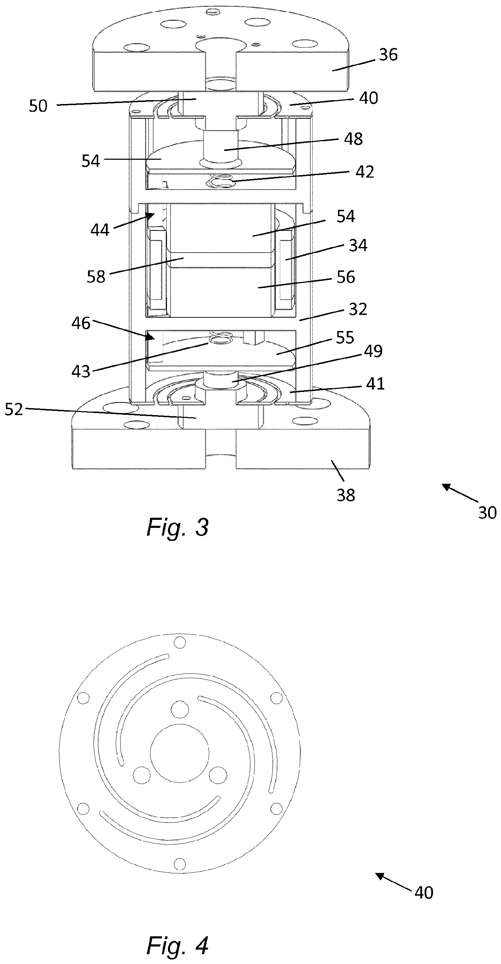

Figure 3 is a cross-section of a device, indicated generally by the reference numeral 30, in accordance with an example embodiment.

The device 30 comprises a first mass element 32 and a second mass element 34, similar to the first mass element 12 and second mass element 14 described above.

The device also includes a top 36 and a base 38. The top 36 is coupled to the first mass element 32 by a first planar spring 40. Similarly, the base 38 is coupled to the first mass element 32 by a second planar spring 41. The first 40 and second 41 planar springs have similar functions to the springs 16 and 18 described above. (For clarity, Figure 4 shows a plan view of the first planar spring 40. The second planar spring 41 may be similar.)

Also shown in Figure 3 is a first helical compression spring 42 and a second helical compression spring 43. First and second helical compressions springs 42 and 43 are also located between the first 32 and second 34 mass elements above and below the first mass element 32 respectively. Although helical springs 42 and 43 are shown in Figure 3, magnetic springs, which use the repulsive force between two oppositely polarised magnets as a spring force, could be used. A combination of helical compression springs and magnetic springs is an additional option. (Other spring combinations are also possible.) The springs 42 and 43 have similar functions to the springs 17a to 17d described above for the device 10.

Implementing the velocity amplification principle in the 2-DoF embedded mass system may result in friction between the two masses and loss of rectilinear motion on impact. The example embodiment shown in Figure 3 seeks to mitigate these issues by eliminating direct contact between the first mass element 32 and the second mass element 34. Instead, the second mass element 34 is extended out of the first mass element 32 in the sections indicated generally by the reference numerals 44 and 46, where the second mass element is attached to a first low friction shaft 48 above the first mass element and a second low friction shaft 49 below the first mass element. The first and second low friction shafts, move within complementary low friction tubes 50 and 52 respectively attached to the device housing. This solution may result in a very low friction contact between the second mass element and the device housing, and also may ensure rectilinear motion of the masses through good alignment. Without this feature, on impact with the first mass element 32, the second mass element 34 may move away at a slight angle resulting in an impact with the inner sliding surface of the first mass element 32 and significant energy losses. This good alignment may also ensure high restitution impacts between the masses.

An electromagnetic transducer is formed from the magnetic circuitry and coils of the first 32 and second 34 mass elements of the device 30 respectively. The transducer may be configured in multiple ways. A gain in power is achieved by increasing the relative velocity between the magnetic circuitry and the coil (i.e. between the first and second mass elements). As noted above, this increase in relative velocity is achieved through a velocity amplification effect, which is realised through substantially elastic collisions between the two mass elements. As also noted above, electrical leads may extend from the coils of the second mass element 34, for example to the power condition circuitry 6 of the system 1.

In the specific arrangement 30 shown in Figure 3, the first mass element 32 includes a first permanent magnet 54 and a second permanent magnet 56, with a soft magnetic spacer 58 sandwiched between the first and second permanent magnets. The first and second permanent magnets 54 and 56 have opposing polarity, but are both attracted to the spacer 58. This results in the magnetic field lines from the permanent magnets being pushed radially outward, through the soft magnetic spacer between the magnets, into the air-gap where the coil is located. Soft magnetic back irons surrounding the magnets complete the magnetic circuitry. This approach results in a highly concentrated and highly directional magnetic field in the coil area.

The configuration of the two mass elements 32, 34, the interposed springs 40 to 43 and the electromagnetic transducer may allow the power generated in the device to be increased, relative to a single-DoF linear VEH, by increasing the relative velocity between the magnet and coil in the transducer. The piecewise linearity (resulting in an effective non-linearity) induced by the freely moving second mass element 34 may increase the frequency range over which the device may effectively harvest energy. This is a result of a change of effective stiffness as the second mass element 34 spends different portions of time in contact with the springs 40 and 41 as the frequency shifts.

Velocity amplification may be implemented in a 2-DoF electromagnetic VEH in a number of ways. As described herein, the first mass element 32 includes permanent magnets and the second mass element 34 includes coils in which a current is induced. In an alternative arrangement, the permanent magnets are provided by the second mass element and the coils by the first mass element. In each case, the desired outcome in a velocity amplified electromagnetic energy harvester is to increase the temporal rate of change of magnetic flux in the coil, $d\phi/dt$, by increasing the relative velocity between the coil and magnetic field, $dz/dt$ ($z$ and $t$ are the spatial and temporal terms, respectively.) This is evident in the equation below which describes the voltage induced ($V_{ind}$) in an electromagnetic generator, based on Faraday's Law:

$$V_{ind} = \frac{d\emptyset}{dt} = \frac{d\emptyset}{dz}\frac{dz}{dt}$$

As described herein, the larger the mass ratio between the first and second mass elements (m1/m2), the greater the velocity gain on impact. In some forms of the invention, mass ratios of between about 7:1 and 15:1 may be used. Of course, other ratios are possible.

In the embodiment described herein, the transducer is formed by the first and second mass elements. The second mass element 34 may move linearly within the first mass element 32.

In one embodiment, the first mass element 32 comprises neodymium iron boron (NdFeB) permanent magnets and soft magnetic back irons, while the second mass element 34 comprises a plastic coil holder with a copper coil wound around it. The first mass element 32 is attached to two springs through the base and cap of the housing (the springs 40 and 42 described above). These springs are in parallel, meaning the effective spring stiffness is the sum of their stiffnesses. Using two springs, rather than one, may eliminate moments which may be present at low frequencies, such that the first mass element 32 would tend to move linearly and out-of-plane with the external vibrations. Meanwhile, the second mass element 34 is free to move within the cavity of the first mass element, receiving kinetic energy upon favourable impacts with the first mass element. This lack of a spring force should allow the second mass element to achieve ballistic motion and higher velocities. To allow for high restitution impacts between the first and second mass elements, high Q-factor springs may be interposed between the first and second mass elements at the displacement limits of the second mass element (the springs 42 and 43 described above), but are attached to either the first or second mass element (the first mass element 32 in the system 30).

Due to the nature of the impacts between the first and second mass elements, the first and second mass elements and the device housing should remain aligned. If this is not the case, upon impact with the first mass element, any misalignment will tend to result in the contact between the second mass element and the spring attached to the first mass element occurring at an angle, resulting in energy losses in the impact. Moreover, after impacting the first mass element, the second mass element is likely to impact the sliding surface it is in contact with, rather than just moving smoothly against that surface, tending to result in further energy losses. In order to ensure the alignment of the second mass element with the first mass element and the housing, and to reduce the friction acting against the second mass element, all contact between the second mass element and other elements of the harvester occur externally to the first mass element. Thus, as described above, two cylindrical shafts 48 and 49 of low friction material, such as polytetrafluoroethylene (PTFE), are attached to the second mass element below and above the first mass element 32. These shafts slide within hollow cylindrical tubes (the tubes 50 and 52 described above) of a complementary low friction material that are attached to the device housing. All sliding contact with the second mass element is in these low friction areas. In this example, it is only through the medium of the springs 42 and 43 that the first and second mass element contact each other when the masses are impacting. In addition, the arrangement allows a single spring to facilitate the impacts between the first and second mass elements. Without the approach described here, the design would typically comprise a number of springs between the first and second mass elements, which would tend to lead to energy losses in the system.

As the second mass element 34 is embedded within the first mass element 32, a mechanism has been developed which extends the second mass element out of the first mass element to allow the contact between the first and second mass elements to be eliminated. The low friction shafts 48, 49 are attached to the second mass elements in regions external to the first mass element and can slide freely within the tubes 50 and 52 that are connected to the housing. To do this, a number of holes are provided in the base and cap of the first mass element (in the regions 44 and 46 described above). Shafts connecting the coil holder portion of the second mass element 34 and the low friction shafts 48, 49 outside the first mass element protrude through these holes, with the connection being made to panels 54 and 55 of the shafts 48 and 49 respectively. Depending on the transducer architecture employed, the presence of these holes may negatively affect the coupling between the coil and magnetic circuitry; however, it is considered that reducing friction may be important in developing a VEH which can operate effectively at low accelerations. Moreover, depending on the transducer design, there may be squeeze film damping (resulting from compressed air). These holes may act as a release to mitigate such effects.

An additional phenomenon which arises in the implementation of a 2-DoF velocity amplified system employing an embedded mass configuration, is that the second mass element 34 tends to rotate about its axis. This may lead to a number of effects depending on the specific implementation of the transducer. The second mass element may reach a physical rotational limit within the first mass element, at which point the second mass element will slide against this limit, resulting in friction between the first and second mass elements. It may also be the case that the rotation would put stress on the coil wire, potentially causing the wire to break, resulting in failure of the harvester device. To eliminate these effects caused by the rotation of the second mass element, a mechanism could be implemented in the low friction shafts (where contact occurs between the second mass element and the housing). This could be implemented in a number of ways, such as (but not limited to):

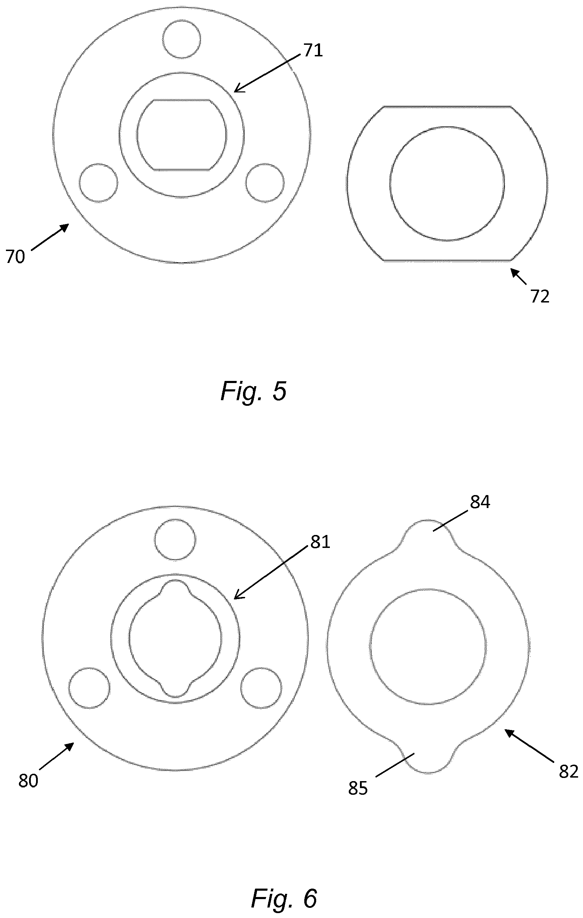

- One or both of the shafts 48, 49 could be truncated, with a corresponding geometry employed in the tube hole, allowing the second mass element 34 to move in the desired plane, but preventing rotation. Such an example embodiment of the arrangement is shown in Figure 5, which shows a cross-section view of a tube 70 and a shaft 72. The shaft 72 (which could be the shaft 48 or the shaft 49 described above) is a truncated shaft such that, when inserted within a central part 71 of the tube 70 (which could be the tube 50 or 52) restricts the ability of the shaft to rotate, thereby restricting the ability of the second mass element (which is connected to the shafts 48 and 49 in the example system 30) to rotate.

- A slight protrusion along the length of one of the shafts, with a corresponding extrusion on the wall of the tube (or vice-versa) would eliminate rotation of the second mass element, while allowing motion in the desired plane. Such an example embodiment of the arrangement is shown in Figure 6, which shows a cross-section view of a tube 80 and a shaft 82. The shaft 82 (which could be the shaft 48 or the shaft 49 described above) has a pair of extrusions/extensions 84, 85 that match similar extensions in the tube 80. Thus, when the shaft 82 is inserted within a central part 81 of the tube 80, the extrusions/extensions restrict the ability of the shaft to rotate, thereby restricting the ability of the second mass element to rotate. Such designs would have to be carefully implemented to avoid increases in friction.

A range of spring types and combinations may be employed in the embedded mass configuration. The springs 40, 41, attached to the first mass element as shown in Figure 3 are planar springs, which may provide a high spring force in a space efficient manner (see Figure 4). These planar springs could be replaced by other spring types, such as magnetic springs, which utilise the repulsive force between oppositely polarised magnets to generate a spring force. One benefit of magnetic springs may be the elimination of thermoelastic damping in the mechanical springs. However, this would require an external shell to allow the first mass element to slide within, which may introduce additional friction. Springs between the first and second mass elements may be implemented as compression springs, which provide a spring force in compression. Again, these mechanical springs (the springs 42, 43 described above) could be replaced by other spring types, such as magnetic springs to reduce damping. As magnetic springs provide a non-linear restoring force, substituting the mechanical springs for magnetic springs may have a significant effect on the device dynamics.

The space within the cavity, in which the second mass element can move free from a spring force is referred to as the gap length. This is a geometric parameter, which may significantly affect the dynamics of the 2-DoF system. This parameter may be tuneable depending on the average acceleration amplitude of the application environment, with increasing gap length resulting in the highest power generation at high acceleration levels. This parameter tends not to scale, however, meaning that as the device volume is reduced, the gap length must be kept constant to maintain the velocity-frequency response with scale.

A multitude of transducer architectures (coil-magnet arrangements) could be implemented in the 2-DoF velocity amplified VEH described. An objective of such architectures may be to maximise the flux gradient in the coil, $d\phi/dz$. As discussed above with reference to Figure 3, this may be done by concentrating the magnetic field in the coil area through magnetic circuitry, typically featuring soft magnetic back-irons and/or magnets of opposing polarity. In the example shown in figure 3, a magnet-through-coil architecture is employed. The magnetic circuitry is effectively the magnetic domains of two loudspeakers placed face-to-face. The magnets are arranged such that the polarities are opposing. This results in the magnetic field lines being pushed radially outward, through the soft magnetic spacer between the magnets, into the air-gap where the coil is located. The soft magnetic back irons surrounding the magnets complete the magnetic circuitry. This approach results in a highly concentrated and highly directional magnetic field in the coil area.

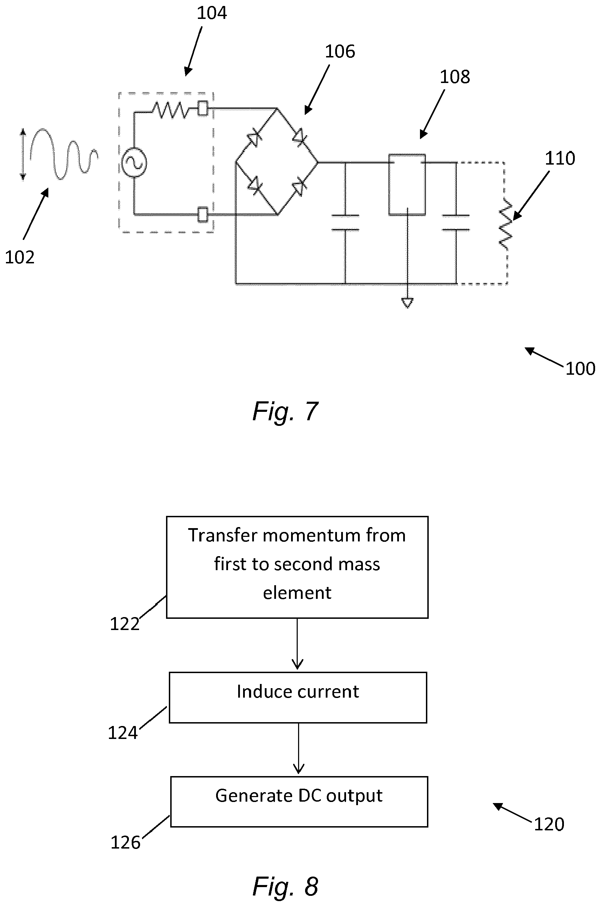

Figure 7 is a circuit schematic, indicated generally by the reference numeral 100, in accordance with an example embodiment. As shown in Figure 4, the system 100 comprises a vibration energy harvester 104, for example the harvester 30 described above. The harvester output power, extracted from the vibrating energy source, is AC. In order to power a sensor (or some other device) or to store power in a battery, regulated DC power may be required. In the example system 100, the harvester 104 provides an alternating current (AC) output to a rectifier circuit 106 that provides a direct current (DC) output stored over a capacitor of a regulator circuit 108. The regulator 108 provides power management and regulation functions in a manner well known in the art and provides a DC output at a certain voltage, if required, for example to a load, such as a sensor/actuator 110.

Thus, the system 100 is able to use a vibration input, indicated generally by the reference numeral 102, to generate power for driving an output, such as the load 110.

Figure 8 is a flow chart, indicated generally by the reference numeral 120, showing an algorithm in accordance with an example embodiment. The algorithm 120 starts at operation 122 where momentum is transferred from the first mass element 32 to the second mass element 34 in response to a vibration (e.g. vibration energy 102). At operation 124, current is induced in a coil of the second mass element in response to the coil moving through the magnetic field generated by the permanent magnets of the first mass element 32. At operation 126, the AC current generated in operation 124 may be converted into a DC output, for example using the rectifier and regular circuits of the system 100 described above, or some similar systems.

If desired, the different functions discussed herein may be performed in a different order and/or concurrently with each other. Furthermore, if desired, one or more of the above-described functions may be optional or may be combined. Similarly, it will also be appreciated that the flow diagram of Figure 8 is an example only and that various operations depicted therein may be omitted, reordered and/or combined.

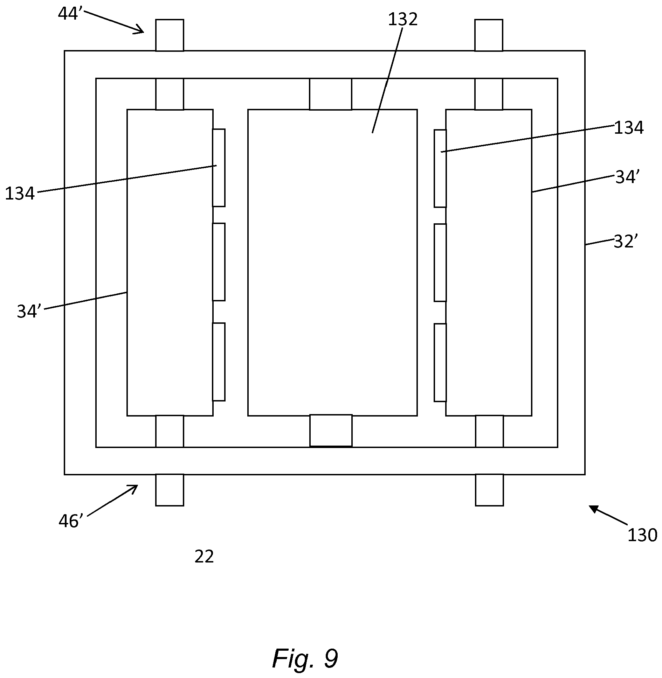

It will be appreciated that the above described example embodiments are purely illustrative and are not limiting on the scope of the invention. Other variations and modifications will be apparent to persons skilled in the art upon reading the present specification. By way of example, the "top" and "bottom" of any device described herein may be interchangeable. The invention may be applicable to systems having many different sizes, for example, having micro- or macro-scales. Furthermore, although the arrangements above describe the first mass element 32 including permanent magnets and the second mass element 34 including coils, the opposite arrangement is possible. For example, Figure 9 is an example of a highly schematic cross-sectional view of a part of a device, indicated generally by the reference numeral 130. The device 130 includes a first mass element 32' and a second mass element 34'. The first mass element includes a coil 132. The second mass element includes a number of permanent magnets 134. As with the device 30, the second mass element 34' is extended out of the first mass element 32' in the sections indicated generally by the reference numerals 44' and 46' (corresponding to the sections 44 and 46 of the device 30 described above). Thus, the second element can connect to low friction shafts (not shown) in a similar manner to the corresponding second element in the device 30.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:

   a first mass element;
   a second mass element located within a first mass element such that the second mass element is free to move within the first mass element, wherein the first mass element has a mass larger than the second mass element; and
   a first shaft connected to the second mass element outside the first mass element, wherein the second mass element extends out of the first mass element to connect with the first shaft, wherein:

   either the first mass element includes permanent magnets and the second mass element includes coils or the second mass element includes permanent magnets and first mass element includes coils, such that a current is induced in the coils when the second mass element moves relative to the first mass element.

2. An apparatus as claimed in claim 1, further comprising a second shaft connected to the second mass element outside the first mass element, wherein one of the first and second shafts is located above the first mass element and the other of the first and second shafts is located below the first mass element.

3. An apparatus as claimed in claim 1 or claim 2, wherein the first mass element is connected to a top of the apparatus via a first spring and/or to a base of the apparatus via a second spring.

4. An apparatus as claimed in claim 3, wherein the first and/or second spring is/are a planar spring.

5. An apparatus as claimed in any one of the preceding claims, further comprising one or more springs to mediate impacts between the first and second mass elements at upper and lower displacement limits of the second mass element.

6. An apparatus as claimed in any one of the preceding claims, wherein the permanent magnets comprises neodymium iron boron permanent magnets.

7. An apparatus as claimed in any one of the preceding claims, wherein the coils comprise a coil holder with copper coil wound around said coil holder.

8. An apparatus as claimed in any one of the preceding claims, wherein the first shaft is shaped to restrict the rotation of the second mass element relative to the first mass element.

9. An apparatus as claimed in any one of the preceding claims, wherein the first and second mass elements interact to generate velocity amplification through momentum transfer.

10. An apparatus as claimed in any one of the preceding claims, wherein the apparatus is a vibration energy harvester.

11. A method comprising:

transferring momentum from a first mass element to a second mass element located within the first mass element, the first mass element having a mass larger than the second mass element, wherein the second mass element is connected to a first shaft outside the first mass element and the second mass element extends out of the first mass to connect with the first shaft, wherein either the first mass element includes permanent magnets and the second mass element includes coils or the second mass element includes permanent magnets and first mass element includes coils; and
inducing a current in the coils when the second mass element moves relative to the first mass element.

12. A method as claimed in claim 11, wherein momentum is transferred by interaction including substantially elastic collisions.

13. A method as claimed in claim 11 or claim 12, wherein momentum is transferred through collisions that do not include physical contact between the first and second mass elements.

14. A system comprising an apparatus as claimed in any one of claims 1 to 10, or implemented according to the method of any one of claims 11 to 13, the system further comprising means for converting the current induced in the coils into a DC supply.

15. A sensor comprising a power supply incorporating an apparatus as claimed in any one of claims 1 to 10 or a system as claimed in claim 14.

*Fig. 1*

*Fig. 2*

Fig. 3

Fig. 4

*Fig. 5*

*Fig. 6*

104

106

108

110

102

100

## Fig. 7

| Transfer momentum from first to second mass element |
| --- |

122

| Induce current |
| --- |

124

| Generate DC output |
| --- |

126

120

## Fig. 8

*Fig. 9*

Europäisches
Patentamt

European
Patent Office

Office européen
des brevets

## EUROPEAN SEARCH REPORT

Application Number

EP 17 20 3016

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2013 090503 A (JAPAN AVIATION ELECTRON) 13 May 2013 (2013-05-13) * paragraphs [0011], [0018], [0020], [0022], [0025], [0026], [0029] - [0031]; figures 3, 7, 9 and 10 * ----- | 1-15 | INV. H02K35/00 F03G7/08 |
| X | US 2016/152252 A1 (KIM JAEHOON [KR] ET AL) 2 June 2016 (2016-06-02) * paragraphs [0134], [0156], [0178]; figures 10-16 * ----- | 1-7,9-15 | |

TECHNICAL FIELDS SEARCHED (IPC)

H02K
F03G

The present search report has been drawn up for all claims

| Place of search | Date of completion of the search | Examiner |
|---|---|---|
| The Hague | 9 April 2018 | Georgopoulos, P |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

**ANNEX TO THE EUROPEAN SEARCH REPORT
ON EUROPEAN PATENT APPLICATION NO.**                EP 17 20 3016

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2018

| Patent document cited in search report | | Publication date | Patent family member(s) | | Publication date |
|---|---|---|---|---|---|
| JP 2013090503 | A | 13-05-2013 | JP | 5414762 B2 | 12-02-2014 |
| | | | JP | 2013090503 A | 13-05-2013 |
| US 2016152252 | A1 | 02-06-2016 | US | 2016152252 A1 | 02-06-2016 |
| | | | US | 2017151964 A1 | 01-06-2017 |
| | | | WO | 2014178650 A1 | 06-11-2014 |

EPO FORM P0459

For more details about this annex : see Official Journal of the European Patent Office, No. 12/82